Europäisches Patentamt

European Patent Office

Office européen des brevets

(11) Veröffentlichungsnummer: **0 261 383**
**A2**

(12) # EUROPÄISCHE PATENTANMELDUNG

(21) Anmeldenummer: **87111801.4**

(51) Int. Cl.⁴ **C11B 3/14**

(22) Anmeldetag: **14.08.87**

(30) Priorität: **25.08.86 DE 3628777**

(43) Veröffentlichungstag der Anmeldung:
**30.03.88 Patentblatt 88/13**

(84) Benannte Vertragsstaaten:
**BE DE FR GB IT SE**

(71) Anmelder: **KÖRTING HANNOVER AG**
**Badenstedter Strasse 56**
**D-3000 Hannover 91(DE)**

(72) Erfinder: **Hupe, Adolf, Dr.-Ing.**
**Lauenburger Hof 3**
**D-3000 Hannover 61(DE)**
Erfinder: **Gehring, Herbert, Dipl.-Ing.**
**An der Mühle 6**
**D-3007 Gehrden 7(DE)**
Erfinder: **Schinke, Waldemar**
**Wiesenstrasse 32**
**D-3007 Gehrden 8(DE)**

(74) Vertreter: **Leine, Sigurd, Dipl.-Ing. et al**
**LEINE & KÖNIG Patentanwälte**
**Burckhardtstrasse 1**
**D-3000 Hannover 1(DE)**

(54) **Verfahren zur Erzeugung niedriger absoluter Drücke für die Verarbeitung von Ölen und Fetten.**

(57) Verfahren zur Erzeugung niedriger absoluter Drücke für die Behandlung von Ölen und Fetten, bei welchem Öl-und Fettanteile, Fettsäuren und/oder Talg sowie Wasserdampf enthaltender Prozessabdampf durch Mischkondensation mit im wesentlichen im Kreislauf geführter Kühlflüssigkeit niedergeschlagen und vor der Wiederverwendung in der Mischkondensation zurückgekühlt wird. Die Kühlflüssigkeit wird durch partielle Verdampfung (flash - Verdampfung) zurückgekühlt. Die Kühlflüssigkeit selbst wird letzten Endes durch Kondensation des Prozessabdampfes erzeugt und besteht im wesentlichen aus Wasser und auch aus Ölen, Fetten, Fettsäuren und/oder Talgen, die in dem Wasser emulgiert und/oder suspendiert sind. Durch die partielle Verdampfung der Kühlflüssigkeit wird die Behinderung der Wärmeabfuhr durch kristallisierte Fettschichten auf den Flächen der üblicherweise verwendeten Wärmeübertrager vermieden. Gleichzeitig wird aus der partiellen Verdampfung ein nahezu vollständig von Ölen und Fetten freies Kondensat als Abwasser gewonnen, das die Umwelt nicht belastet. Außerdem ist es möglich, die Abscheidung der Öle, Fette, Fettsäuren und/oder Talge erst nach der Rückkühlung durchzuführen. Die Kondensation des Dampfes aus der partiellen Verdampfung wird bei Temperaturen über 0° C in unu-nterbrochener Betriebsweise durchgeführt. Wird das Verfahren bei Temperaturen dicht über 0° C angewendet, so ergeben sich Vorteile in der guten Wirkung der Abscheidung der Öle und Fette und auch darin, daß das erhaltene Kondensat besonders niedrige Gehalte an Ölbestandteilen aufweist.

FIG 1

## Verfahren zur Erzeugung niedriger absoluter Drücke für die Behandlung von Ölen und Fetten

Die Erfindung betrifft ein Verfahren der im Oberbegriff des Anspruchs 1 genannten Art zur Erzeugung niedriger absoluter Drücke für die Behandlung von Ölen und Fetten.

Bei bekannten Verfahren der betreffenden Art werden bei der Behandlung pflanzlicher und tierischer Öle und Fette, z.B. bei der physikalischen Raffination, bei der Desodorierung und bei der destillativen Fraktionisierung der Fettsäuren, niedrige absolute Drücke zwischen 0,1 und etwa 60 mbar angewendet. Bei diesen Verfahren wird Wasserdampf eingeblasen, um den Partialdruck für die organischen Komponenten herabzusetzen und außerdem die selektive Wirkung des Wassers auf den Dampfdruck der einzelnen organischen Komponenten auszunutzen. Der bei niedrigen absoluten Drücken abzusaugende Prozeßabdampf enthält neben Wasserdampf Öle, Fette, Fettsäuren, Talg und/oder ähnliche Bestandteile. Um die organischen Bestandteile dieses Dampfes möglichst weitgehend zurückzuerhalten, ist es üblich, den Prozeßabdampf durch Brüdenwäscher zu schicken, die mit einer Absorptionsflüssigkeit beaufschlagt sind, die normalerweise aus artverwandten Ölen besteht.

Bei den im oberen Teil dieses Druckbereichs zwischen etwa 40 und 60 mbar ablaufenden bekannten Verfahren ist es üblich, den rohen oder vorgereinigten Prozeßabdampf direkt in Mischkondensatoren niederzuschlagen, die mit Kühlwasser gekühlt und mit einer entsprechend dem Kondensationsdruck ausgelegten Gassaugpumpe ausgestattet sind.

Bei den niedrigeren Drücken zwischen 0,1 und etwa 40 mbar ist es bekannt, Dampfstrahlkompressoren zu verwenden, um das Dämpfegemisch bis auf einen Druck zu verdichten, bei dem das Dämpfegemisch bei einer Temperatur oberhalb von 0°C kondensiert werden kann. Verwendet werden Mischkondensatoren, die mit Wasser gekühlt werden. Bei der Mischkondensation nimmt der Kühlwasserstrom das Kondensat des Dämpfegemisches und gegebenenfalls des Treibdampfes der Dampfstrahlkompressoren mit auf.

Um die Umweltbelastung zu senken, ist es bekannt, aus dem Kühlwasserstrom und dem Kondensat des Dämpfegemisches die Öl-und Fettanteile soweit möglich abzuscheiden, bevor dieses als Prozeßabwasser in das Abwassersystem geleitet wird.

In einer bekannten Weiterbildung des Verfahrens der betreffenden Art wird der Kühlflüssigkeitsstrom nach der Fettabscheidung und einer Rückkühlung im Kreislauf wieder in die Mischkondensation zur Wiederverwendung zurückgeführt und dadurch zu einem mit Öl und Fetten angereicherten Kühlflüssigkeitsstrom. Dabei wird der aus dem Kondensat des Dämpfegemisches gebildete Kühlwasserüberschuß in flüssiger Phase - mit Ölen, Fetten, Fettsäuren und/oder Talg belastet - aus dem Kreislauf abgetrennt. Bei der Rückkühlung des Kühlflüssigkeitskreislaufstromes werden Oberflächenwärmeübertrager angewendet, die es gestatten, das die Wärme übernehmende Kühlmedium von Ölen und Fetten vollständig freizuhalten. Der Druck in der Mischkondensation läßt sich dadurch senken, daß man den Kühlflüssigkeitsstrom durch eine Kältemaschine beliebiger Bauart auf eine niedrigere Temperatur zurückkühlt. Durch diese Maßnahme kann Energie eingespart werden. Die Erfindung bezieht sich auf Verfahren dieser Art, bei denen der Kühlflüssigkeitsstrom im Kreislauf geführt wird.

Dieses bekannte Verfahren hat den Nachteil, daß sich in den zur Rückkühlung verwendeten Wärmeübertragern kristallisierte oder verfestigte Fettschichten auf den Wärmeübertragungsflächen bilden, welche einen umständlichen Wechselbetrieb von mindestens zwei Kühlapparaten erforderlich machen. Der jeweils beladene Kühler muß durch Beheizen und Abschmelzen der Fettschicht regeneriert werden. Außerdem besteht der Nachteil, daß Öle, Fette, Fettsäuren und/oder Talge nur stromaufwärts vor den Oberflächenkühlern abgeschieden werden können, also nicht mit höchstmöglicher Wirkung stromabwärts hinter diesen Kühlern bei der niedrigsten Temperatur, die im Kreislauf auftritt, da sonst die Bildung der Fettschichten in den Kühlern noch verstärkt wird.

Durch die DE-OS 2 317 451 ist ein Verfahren und eine Vorrichtung zur Abtrennung von Fettmaterial aus Dämpfen bekannt, bei dem durch eine Vorbehandlung ein Teil der im Dampf enthaltenen Öle und Fette abgeschieden werden kann. Vor der Mischkondensation wird eine Kühlflüssigkeit in einem so kleinen Massenstrom in Prozeßabdampf eingespritzt, daß durch deren partielle Verdampfung eine Abkühlung des Prozeßabdampfes bis zum Wasserdampfsättigungspunkt erzielt wird. Dadurch kondensiert ein Teil der organischen Bestandteile des Prozeßabdampfes, und die gebildeten Kondensattropfen können in einem nachgeschalteten Tropfenabscheider teilweise abgeschieden werden. Dadurch wird die Verunreinigung des in der nachgeschalteten Mischkondensation verwendeten Kühlwassers vermindert. Eine vollständige Reinigung des Kühlwasserstromes ist jedoch prinzipiell nicht erreichbar.

Der Erfindung liegt die Aufgabe zugrunde, die Nachteile des bekannten Verfahrens der betreffenden Art zu vermeiden, also die Bildung kristallisierter oder verfestigter Fettschichten auf Wärmeübertragungsflächen zu vermeiden und die Möglichkeit zu schaffen, gleichzeitig ein weitgehend von Ölen und Fetten freies Kondensat zu gewinnen, das die Umwelt praktisch nicht belastet.

Die der Erfindung zugrundeliegende Aufgabe wird durch die im Kennzeichen des Anspruchs 1 angegebene Lehre gelöst.

Die Erfindung beruht auf dem Grundgedanken, durch Anwendung der partiellen Verdampfung der Kühlflüssigkeit anstelle der Rückkühlung in Oberflächenwärmeaustauschern die Behinderung der Wärmeabfuhr durch kristallisierte Fettschichten zu vermeiden.

Bei der partiellen Verdampfung wird überraschenderweise ein Dämpfegemisch erhalten, das nahezu vollständig aus Wasserdampf und nur noch aus Spuren von Öl-und Fettanteilen besteht, die bei der Kondensation auch bei niedrigen Temperaturen herab bis zu 0° C noch flüssig bleiben. Diese Öl-und Fettanteile behindern daher eine Kondensation des Dampfegemisches in einem Oberflächenkondensator nicht. Nach der Kondensation können diese geringen Mengen organischer Bestandteile - falls überhaupt erforderlich - auf einfache Weise vom Wasser abgetrennt werden. Bei dieser Prozedur ist eine Belastung des Kühlwassers durch Öl-und Fettbestandteile vollständig zu vermeiden.

Es ist auch möglich, das aus der partiellen Verdampfung erhaltene Dampfegemisch mit den Spuren von Öl-und Fettanteilen in einer Mischkondensation mit Kühlwasser niederzuschlagen. Dabei werden die geringen Öl-und Fettgehalte durch die Mischung mit dem Kühlwasser so weitgehend verdünnt, daß diese nicht als Belastung für die Umwelt anzusehen sind.

Besondere Vorteile ergeben sich, wenn die partielle Verdampfung der Kühlflüssigkeit und auch eine Abscheidung der Öle und Fette aus dem Kreislauf der Kühlflüssigkeit bis zu einer Temperatur dicht über 0° C, vorzugsweise zwischen 0° und 20° C durchgeführt werden. Einerseits erhält man einen Dampf, der äußerst geringe Spuren von Öl-und Fettbestandteilen aufweist, und andererseits verläuft die Abscheidung der Öle und Fette aus der Kühlflüssigkeit wirkungsvoller als bei höheren Temperaturen.

Weiterhin ist es bei der Anwendung der partiellen Verdampfung möglich, die Abscheidung der Öle, Fette, Fettsäuren und/oder Talge aus dem Kühlflüssigkeitskreislauf erst stromabwärts nach dessen Rückkühlung durchzuführen. Hier ist die höchstmögliche Wirkung der Abscheidung gewährleistet, weil an dieser Stelle des Kreislaufs die tiefste Temperatur und höchste Konzentration der abzuscheidenden Stoffe vorliegt.

Anhand der Zeichnungen soll die Erfindung an Ausführungsbeispielen näher erläutert werden.

Fig. 1 zeigt eine erste Vorrichtung zur Durchführung des erfindungsgemäßen Verfahrens,

Fig. 2 zeigt eine Abwandlung der Vorrichtung nach Fig. 1,

Fig. 3 zeigt eine Abwandlung der Vorrichtung nach Fig. 2,

Fig. 4 zeigt eine andere Abwandlung der Fig. 2 und

Fig. 5 zeigt eine abgewandelte Ausführungsform der Fig. 4.

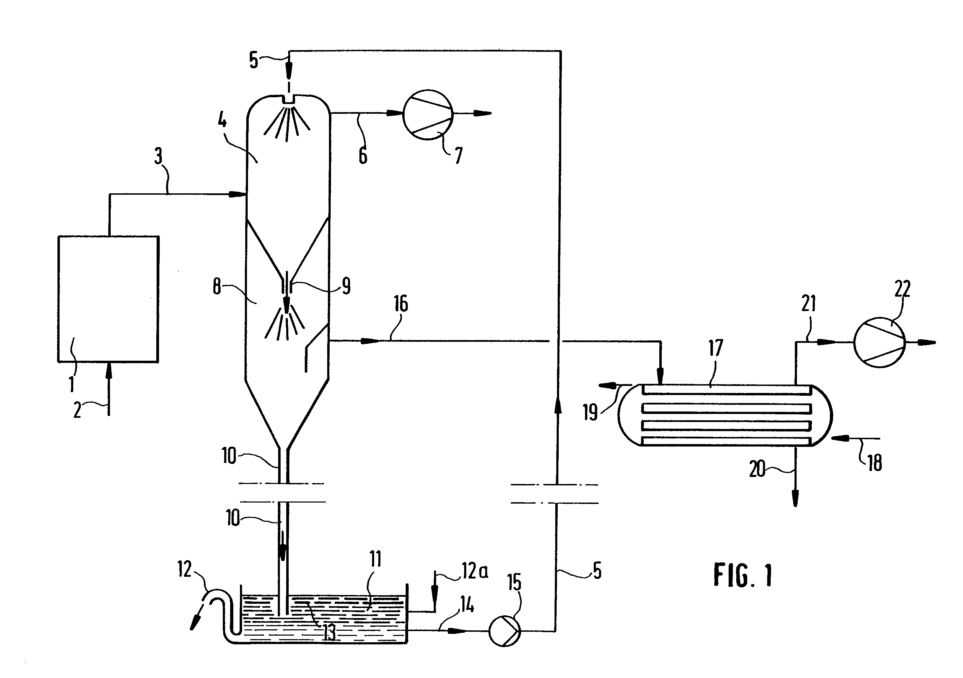

In Fig. 1 wird ein verfahrenstechnischer Apparat 1 für die Behandlung von Ölen und Fetten, der ein Dampfer zur physikalischen Raffination oder zur Desodorierung oder auch eine Apparatur zur destillativen Fraktionierung für Fettsäuren sein kann, durch eine Leitung 2 mit Stripdampf beaufschlagt. Nach der Aufnahme unerwünschter Öl-und Fettanteile, Fettsäuren und/oder Talge wird dieser Prozessabdampfstrom durch eine Leitung 3 direkt in einen Mischkondensator 4 geleitet. Durch eine Leitung 5 wird Kühlflüssigkeit in den Mischkondensator 4 eingespritzt, welche den durch die Leitung 3 eintretenden Prozessabdampf kondensiert. Durch eine Leitung 6 werden die nichtkondensierenden gasförmigen Bestandteile zu einer Gassaugpumpe 7 abgeführt.

Die Mischung aus Kühlflüssigkeit und Kondensat gelangt in einen Verdampfer 8 durch eine Düse 9. Hier wird die Kühlflüssigkeit durch partielle Verdampfung zurückgekühlt und fließt dann durch ein barometrisches Fallrohr 10 in einen offenen Fallwasserkasten 11 ab. Falls einmal zuviel Kühlflüssigkeit auftreten sollte, fließt dieses durch das Überlaufrohr 12 ab. Fehlende Kühlflüssigkeit kann mit Wasser durch eine Leitung 12a ergänzt werden. An der Oberfläche des Fallwasserkastens 11 sammelt sich eine Schicht 13 aus Öl und Fettbestandteilen, Fettsäuren und/oder Talgen an, die in beliebiger Weise, z.B. mit Handgeräten, abgeschöpft werden kann. Die Kühlflüssigkeit wird durch eine Leitung 14 zu einer Pumpe 15 geführt, die dieses wieder zum Mischkondensator 4 zurückfördert.

Der bei der partiellen Verdampfung im Verdampfer 8 gebildete Dampf entspricht massenmäßig im wesentlichen dem durch die Aufnahme des Kondensats aus dem Prozessabdampfstrom in dem Mischkondensator 4 hervorgerufenen Flüssigkeitsüberschuß. Dieser nur sehr wenig Öl und Fett enthaltende Dampf wird aus dem Verdampfer 8 durch eine Leitung 16 in einen Oberflächenkondensator 17 abgeführt, der durch eine Leitung 18 mit einem geeigneten Kühlmittel, wie Luft, Wasser oder Kühlsole, beschickt wird. Das Kühlmittel fließt nach der Benutzung durch eine Leitung 19 ab. Das gebildete saubere Kondensat wird aus dem Kondensator 17 durch eine Leitung 20 abgezogen und praktisch ohne Umweltbelastung abgegeben. Eine Leitung 21 führt die nichtkondensierbaren Anteile aus dem Kondensator zu einer Gassaugpumpe 22 ab.

Zur Bewirkung der partiellen Verdampfung des Kühlflüssigkeitsstromes wird der Druck im Verdampfer 8 und im Kondensationsraum des Oberflächenkondensators 17 niedriger gehalten als der Druck im Mischkondensator 4.

Durch die ständige Aufnahme des Kondensats aus dem Prozessabdampf im Mischkondensator 4, durch die partielle Verdampfung im Verdampfer 8 und durch die Abscheidung von Ölen und Fetten aus dem Fallwasserkasten 11 ändert die Kühlflüssigkeit innerhalb des Kreislaufs ihre Zusammensetzung und besteht nach einigen Stunden nur noch aus Anteilen, die aus dem Prozessabdampf stammen - auch wenn der Betrieb zuerst mit Wasser begonnen wurde.

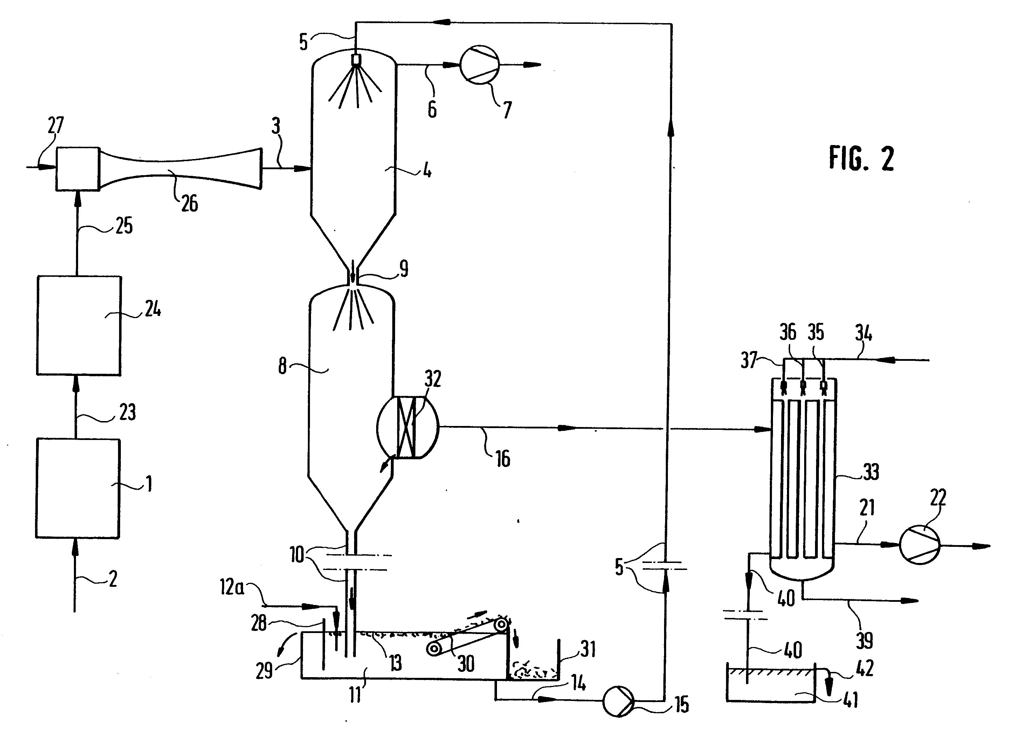

Fig. 2 zeigt eine Abwandlung der Vorrichtung nach Fig. 1, gleiche Teile sind mit gleichen Bezugsziffern versehen. Der verfahrenstechnische Apparat 1 wird für die Behandlung von Ölen und Fetten durch die Leitung 2 mit Stripdampf versorgt. Der hier gebildete Prozessabdampf fließt unter niedrigem absoluten Druck durch eine Leitung 23 in einen Brüdenwäscher 24 und teilgereinigt weiter durch eine Leitung 25 in einen Dampfstrahlkompressor 26. Dieser wird durch eine Leitung 27 mit Treibdampf beschickt und verdichtet den Prozessabdampf auf den Kondensationsdruck im Mischkondensator 4. Die aus dem Prozessabdampf und dem Treibdampf gebildete Mischung tritt durch die Leitung 3 in den Mischkondensator 4 ein. Dieser wird durch die Leitung 5 mit Kühlflüssigkeit versorgt. Durch die Leitung 6 fließen die nichtkondensierbaren Gase und Dämpfe zu der Gassaugpumpe 7 ab.

In den Verdampfer 8 tritt die Summe aus Kondensat und Kühlflüssigkeit durch die Düse 9 ein. Hier wird der Kühlflüssigkeitsstrom infolge des gegenüber dem Druck im Mischkondensator 4 niedrigeren Druckes partiell verdampft. Der Rest fließt durch das barometrische Fallrohr 10 in den Fallwasserkasten 11 ab. Falls einmal zuviel Flüssigkeit im Kreislauf auftritt, fließt dieses unter einer Zwischenwand 28 hindurch über ein Wehr 29 ab. Fehlendes Wasser kann durch die Leitung 12a ersetzt werden. An der Oberfläche des Fallwasserkastens 11 bildet sich eine Schicht aus Ölen und Fetten, die durch ein Förderband 30 aus der Flüssigkeit herausgehoben und über den Behälterrand in einen Sammelkasten 31 gefördert wird. Der auf diese Weise teilgereinigte Hauptflüssigkeitsstrom fließt durch die Leitung 14 zur Pumpe 15, die diesen durch die partielle Verdampfung auf die erforderliche Temperatur abgekühlten Flüssigkeitsstrom wieder durch die Leitung 5 zum Mischkondensator 4 zurückfördert.

Nachdem der im Verdampfer 8 gebildete Dampf durch einen Tropfenabscheider 32 von Flüssigkeitsresten befreit worden ist, strömt dieser durch die Leitung 16 in einen Rohrbündeloberflächenkondensator 33, der wärmestromabwärts als Fallstromverdampfer für das durch Leitungen 34, 35, 36 und 37 zur Verteilung auf das Rohrbündel eingespritzte Kältemittel wirkt. Der Kältemitteldampf wird durch eine Leitung 39 zu einer nicht dargestellten Kompressions-oder Absorptionskältemaschine geführt und kommt von dorther im Kreislauf nach der Kondensation als Kondensat wieder durch die Leitung 34 zurück. Das im Rohrbündelkondensator 33 gebildete Kondensat des Dampfes aus dem Verdampfer 8 fließt durch ein Fallrohr 40 in einen Fallwasserkasten 41 ab, aus dem es durch einen Überlauf 42 praktisch sauber ohne Belastung der Umwelt abgegeben werden kann.

Der Rohrbündelkondensator 33 wird vorteilhaft so betrieben, daß der durch Leitung 16 zuströmende Dampf dicht über 0° C, z.B. bei 0,5 ... 8° C niedergeschlagen wird. Dadurch kann im Verdampfer 8 ein Druck von 6,3 ... 11 mbar erzeugt werden, der zu einer Kühlflüssigkeitstemperatur von 1 ... 9° C nach der partiellen Verdampfung führt.

Ohne großen Aufwand kann bei der Rückkühlung durch partielle Verdampfung der Kühlflüssigkeitskreislaufstrom verhältnismäßig groß gehalten werden, so daß sich dessen Aufwärmung im Mischkondensator 4 und dessen Abkühlung im Verdampfer 8 auf sehr kleine Temperaturdifferenzen von z.B. 1 ... 4 K reduzieren lassen.

Damit ist es möglich, den Druck im Mischkondensator 4 bis auf 1,5 ... 4 mbar oberhalb des Druckes im Verdampfer 8 abzusenken. Ein derart niedriger Druck in dem Mischkondensator 4 von etwa 8 ... 15 mbar führt zu einem niedrigen Energieverbrauch im vorgeschalteten Kompressor, hier dem Dampfstrahlkompressor 26.

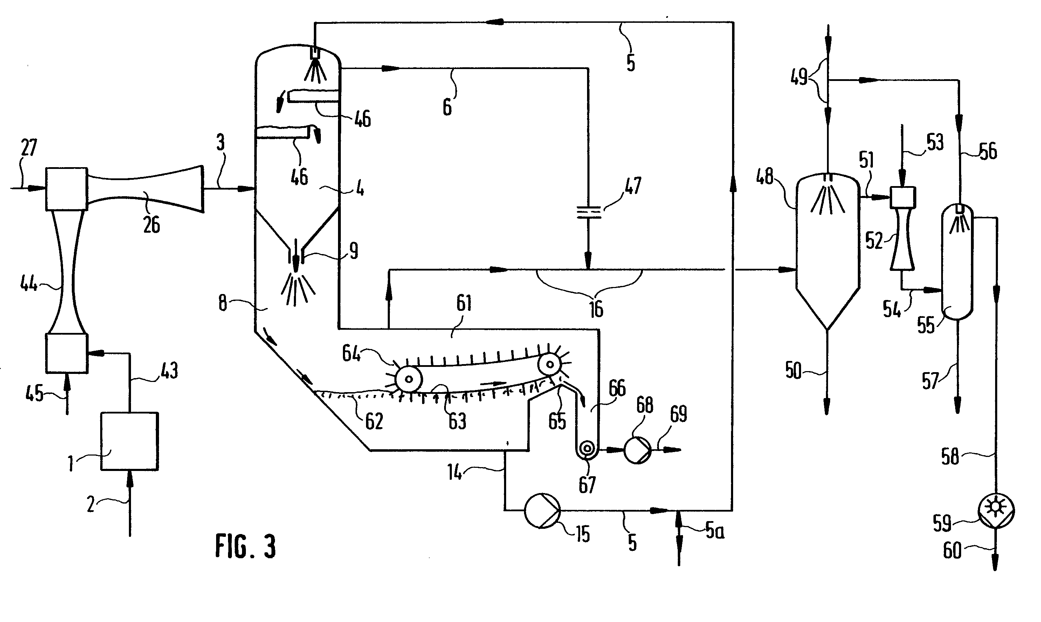

Fig. 3 zeigt eine Abwandlung der Vorrichtung gemäß Fig. 2, sich entsprechende Teile sind mit gleichen Bezugsziffern versehen. Bei dem in Fig. 3 dargestellten verfahrenstechnischen Apparat 1 wird der durch die Leitung 2 eingeblasene Stripdampf mit unerwünschten Öl-und Fettanteilen beladen und strömt als Prozessabdampf durch Leitung 43 in den Dampfstrahlkompressor 44 ein, der durch Leitung 45 mit Treibdampf beaufschlagt wird. Dieser Dampfstrahlkompressor ist dem Dampfstrahlkompressor 26 vorgeschaltet, der mittels des durch die Leitung 27 eintretenden Treibdampfes den Druck weiter erhöht bis auf den in der Leitung 3 herrschenden Kondensationsdruck im Mischkondensator 4. Dieser Mischkondensator ist mit Kaskadeneinbauten 46 ausgestattet, über welche die durch Leitung 5 zugeführte Kühlflüssigkeit hinabfließt. Die unkondensierbaren, gasförmigen Bestandteile werden durch die Leitung 6 und eine Blende 47 mit in die Leitung 16 abgeführt.

In den Verdampfer 8 tritt die Kühlflüssigkeit aus dem Mischkondensator 4 durch die Düse 9 über. Der durch partielle Verdampfung gebildete Dampf wird durch die Leitung 16 in einen Mischkondensator 48 überführt, der durch Leitung 49 mit lokalem Kühlwasser beschickt wird. Nach der Kondensation des Dampfes fließt dieses Kühlwasser durch Leitung 50 ab.

Durch Leitung 51 werden die nichtkondensierten Anteile -9 des Dampfestromes in einen Dampfstrahlkompressor 52 geleitet, der durch Leitung 53 den erforderlichen Treibdampf erhält. Vom Austritt des Dampfstrahlkompressors 42 führt eine Leitung 54 in einen Mischkondensator 55, welcher aus der von Leitung 49 abgezweigten Leitung 56 mit Kühlwasser versorgt wird. Kühlwasser und Kondensat fließen durch Leitung 57 ab. Die nichtkondensierten Gase und Dämpfe strömen durch Leitung 58 zu einer als Gassaugpumpe eingesetzten Wasserringvakuumpumpe 59, die durch Leitung 60 mit der Atmosphäre verbunden ist.

Der nicht verdampfte Anteil der Kühlflüssigkeit wird unter dem Verdampfer 8 in einem geschlossenen Abscheidebehälter 61 gesammelt. Auf der Oberfläche des Wassers scheidet sich eine Schicht 62 aus Fett und Öl ab, die durch ein Förderband 63, das mit Rippen 64 besetzt ist, über eine Behälterwand 65 hinweg in einen Sammelkasten 66 gefördert wird. In dessen Bodenbereich ist eine Schnecke 67 angebracht, welche die verfestigten und kristallisierten Fette sowie Öle einer Verdrängerpumpe 68 zufördert. Diese stößt die Fette und Öle durch Leitung 69 aus dem geschlossenen Abscheidebehälter 61 aus. Die geschlossene Ausführung der Abscheidung verhindert den Zutritt von Luft. Auf diese Weise wird eine Sättigung des Kühlflüssigkeitsstromes mit Luft und eine entsprechend hohe Belastung des Dampfstrahlkompressors 52 sowie der Wasserringpumpe 59 vermieden.

Der zurückgekühlte Hauptkühlflüssigkeitsstrom fließt durch die Leitung 14 über die Pumpe 15 und die Leitung 5 wieder zurück zum Mischkondensator 4. Durch die Leitung 5a kann ein Teilstrom der Kühlflüssigkeit abgezweigt werden, falls sich im Kreislauf zuviel davon ansammelt, oder Wasser hinzugefügt werden, falls Mangel auftritt.

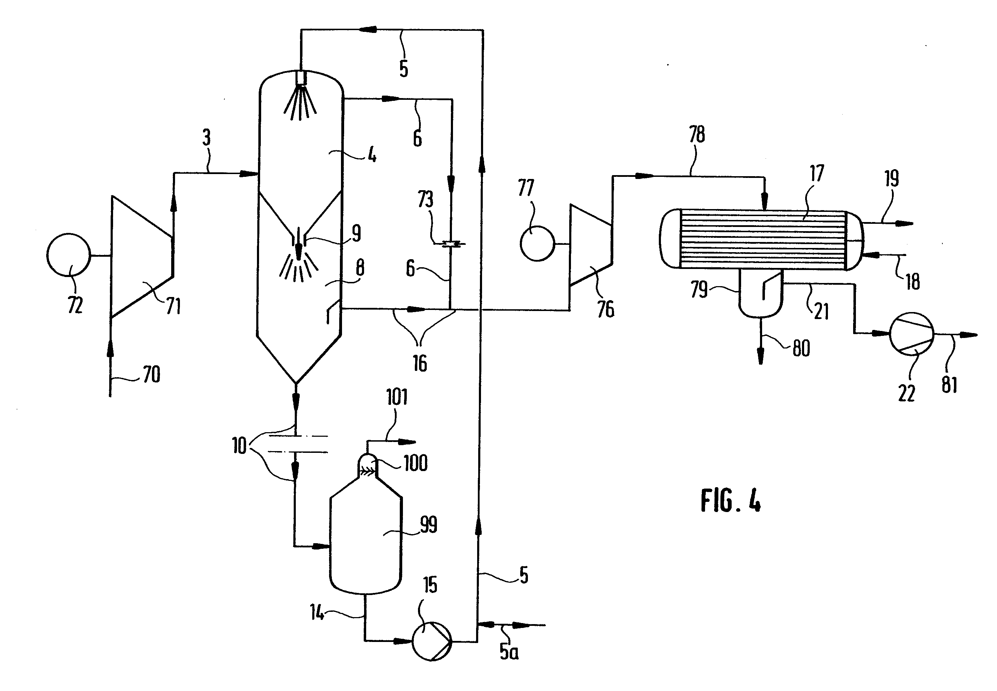

Fig. 4 zeigt eine Abwandlung der Fig. 1, sich entsprechende Teile sind mit gleichen Bezugsziffern versehen. In Fig. 4 wird der Prozessabdampfstrom durch Leitung 70 einem Radialkompressor oder Radialventilator 71 zugeführt, der durch einen Motor 72 angetrieben wird. Hier wird der Druck des Prozessabdampfes so weit erhöht, daß dessen Kondensation im Mischkondensator 4 oberhalb von 0° C ablaufen kann. Der Mischkondensator 4 wird durch die Leitung 5 mit Kühlflüssigkeit beschickt. In den Verdampfer 8 fließt die Mischung aus Kühlflüssigkeit und Kondensat durch die Düse 9 ab. Der hier nicht verdampfende Anteil fließt durch das Fallrohr 10 in den geschlossenen Dekantierbehälter 99, der vollständig mit Kühlflüssigkeit gefüllt ist. In der oberen Haube 100 sammeln sich Öle und Fette an, die kontinuierlich oder chargenweise von Zeit zu Zeit durch die Leitung 10 abgeführt werden. Dabei kann auch ein geringer Teil der wässerigen Phase der Kühlflüssigkeit mit aus dem Kreislauf ausgeschleust werden.

Durch die Leitung 14 gelangt die zurückgekühlte Kühlflüssigkeit zur Pumpe 15, die den Mischkondensator 4 durch die Leitung 5 versorgt. Das aus dem Mischkondensator durch Leitung 6 abströmende, nicht kondensierbare Gas wird durch eine Blende 73 mit in eine Leitung 16 abgeleitet, welche den bei der partiellen Verdampfung im Verdampfer 8 entstehenden Dampf einem Radialkompressor 76 zuführt, der durch einen Motor 77 angetrieben wird. Der komprimierte Dampf fließt weiter durch die Leitung 78 in den Oberflächenkondensator 17, dem durch die Leitung 18 Kühlwasser zugeführt wird, welches durch die Leitung 19 wieder abfließt. Das Kondensat dieses Dampfes fließt durch den hot well 79 und weiter durch die Leitung 80 praktisch ohne Belastung der Umwelt ab.

Aus dem hot well 79 werden die nicht kondensierten Gase und Dämpfe durch die Leitung 21 zu der Gassaugpumpe 22 beliebiger Bauart geleitet. Die Leitung 81 stellt die Verbindung zur Atmosphäre her.

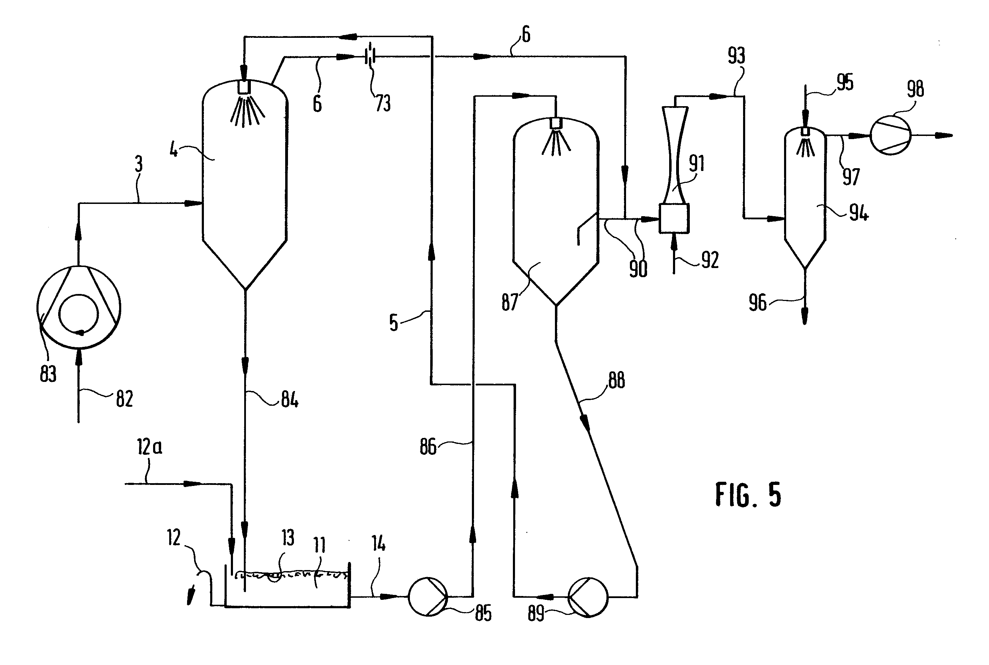

Fig. 5 zeigt eine weitere abgewandelte Ausführungsform, und sich entsprechende Teile sind mit gleichen Bezugsziffern versehen. In Fig. 5 wird der Prozessabdampf durch Leitung 82 einem Rotations-Verdränger-Kompressor 83 zugeführt, der zur Klasse der Schrauben-oder Roots-Kompressoren gehören kann. Der auf den Kondensationsdruck verdichtete Prozessabdampf gelangt durch Leitung 3 in den Mischkondensator 4, der die erforderliche Kühlflüssigkeit aus der Leitung 5 erhält. Die nicht kondensierenden Gas-und Dampfanteile strömen durch die Leitung 6 und durch die Blende 73 mit in die Leitung 90.

In diesem Falle sind der Mischkondensator 4 und der Verdampfer 87 getrennt, und der Fallwasserkasten 11, in dem die Öle und Fette abgeschieden werden, ist zwischen diesen beiden Apparaten angeordnet.

Aus dem Mischkondensator 4 fließen die Kühlflüssigkeit und das Kondensat durch ein Fallrohr 84 in den offenen Fallwasserkasten 11, dessen Flüssigkeitsinhalt durch das Überlaufrohr 12 und die Zuleitung 12a konstantgehalten wird. Die sich absetzende Schicht 13 von Fett und Öl kann in beliebiger Weise abgeschöpft werden. Der Kühlflüssigkeitsstrom fließt durch die Leitung 14 einer Pumpe 85 zu, die diesen durch Leitung 86 in einen Verdampfer 87 fördert. Nach der dort stattfindenden partiellen Verdampfung fließt die Kühlflüssigkeit durch Leitung 88 zur Pumpe 89 und wird durch die Leitung 5 im Kreislauf wieder in den Mischkondensator 4 eingespritzt.

Der im Verdampfer 87 durch partielle Verdampfung aus dem Kühlflüssigkeitsstrom gebildete Dampf strömt durch Leitung 90 in einen Dampfstrahlkompressor 91, der durch Leitung 92 mit Treibdampf versorgt wird. Der dort verdichtete Dampf wird dann durch Leitung 93 in einen Mischkondensator 94 geleitet, der mit Kühlwasser durch Leitung 95 beaufschlagt wird. Kühlwasser und Kondensat fließen durch ein Fallrohr 96 praktisch sauber ab. Durch Leitung 97 werden die nicht kondensierten Gas-und Dampfanteile einer Gassaugpumpe 98 zugeführt, die mit der Atmosphäre verbunden ist.

Mit den Verfahrensausbildungen gemäß Fig. 4 und Fig. 5 kann der Umlauf des Kühlflüssigkeitsstromes - und damit auch die Abscheidung der Fette und Öle sowie die Erzeugung des Dampfes durch partielle Verdampfung der Kühlflüssigkeit - dicht über 0° C durchgeführt werden, obgleich keine Kompressions-und Absorptionskältemaschine angewendet wird. In diesem Temperaturbereich läßt sich einerseits eine hohe Wirkung bei der Öl-und Fettabscheidung aus der Kühlflüssigkeit im Behälter 99 (Fig. 4) und im Fallwasserkasten 11 (Fig. 5) erzielen und andererseits durch die partielle Verdampfung der Kühlflüssigkeit im Verdampfer 8 (Fig. 4) und im Verdampfer 87 (Fig. 5) ein besonders niedriger Gehalt an Öl-und Fettbestandteilen im Dampf erreichen.

## Ansprüche

1. Verfahren zur Erzeugung niedriger absoluter Drücke für die Behandlung von Ölen und Fetten, bei welchem Öl-und Fettanteile, Fettsäuren und/oder Talge sowie Wasserdampf enthaltender Prozessabdampf im wesentlichen vollständig durch Mischkondensation mit im wesentlichen im Kreislauf geführter, überwiegend aus Wasser sowie aus darin emulgierten und suspendierten Ölen, Fetten, Fettsäuren und/oder Talgen bestehende, im wesentlichen durch Kondensation des Prozessabdampfes gewonnene Kühlflüssigkeit niedergeschlagen wird, die vor der Wiederverwendung in der Mischkondensation zumindest teilweise von Öl-und Fettanteilen befreit werden kann und durch Wärmeentzug zurückgekühlt wird, **dadurch gekennzeichnet**, daß die Kühlflüssigkeit durch partielle Verdampfung zurückgekühlt und der dabei gebildete Dampf in vorzugsweise ununterbrochener Betriebsweise bei Temperaturen über 0° C kondensiert wird.

2. Verfahren nach Anspruch 1, **dadurch gekennzzeichnet**, daß die niedrigen absoluten Drücke im Bereich von 0,1 bis ungefähr 60 mbar liegen.

3. Verfahren nach Anspruch 1, **dadurch gekennzeichnet**, daß die partielle Verdampfung der Kühlflüssigkeit und die Kondensation des dabei gebildeten Dampfes bei Temperaturen dicht über 0° C, vorzugsweise zwischen 0 und 20° C durchgeführt werden.

4. Verfahren nach Anspruch 1, **dadurch gekennzeichnet**, daß der durch partielle Verdampfung der Kühlflüssigkeit erzeugte Dampf in einem nachfolgenden Mischkondensator (48) niedergeschlagen wird, der mit Kühlwasser beaufschlagt wird.

5. Verfahren nach Anspruch 4, **dadurch gekennzeichnet**, daß das Kühlwasser aus dem Mischkondensator (48) durch Wärmeentzug z.B. in einem Kühlturm zurückgekühlt und im wesentlichen im Kreislauf zum Mischkondensator (48) zurückgeführt wird.

6. Verfahren nach Anspruch 1, **dadurch gekennzeichnet**, daß der durch partielle Verdampfung der Kühlflüssigkeit erzeugte Dampf in einem Oberflächenkondensator niedergeschlagen wird, der durch Kühlwasser gekühlt wird.

7. Verfahren nach den Ansprüchen 1 und 3, **dadurch gekennzeichnet**, daß der durch partielle Verdampfung der Kühlflüssigkeit erzeugte Dampf bei Temperaturen dicht über 0° C in einem Oberflächenkondensator niedergeschlagen wird, der durch Kühlsole niedriger Temperatur gekühlt wird.

8. Verfahren nach den Ansprüchen 1 und 3, **dadurch gekennzeichnet**, daß der durch partielle Verdampfung der Kühlflüssigkeit erzeugte Dampf bei Temperaturen dicht über 0° C in einem Oberflächenkondensator niedergeschlagen wird, der wärmestromabwärts als Kältemittelverdampfer einer Kompressionskältemaschine wirkt.

9. Verfahren nach den Ansprüchen 1 und 3, **dadurch gekennzeichnet**, daß der durch partielle Verdampfung der Kühlflüssigkeit erzeugte Dampf bei Temperaturen dicht über 0° C in einem Kondensator niedergeschlagen wird, der wäremestromabwärts als Kältemittelverdampfer einer ge schlossenen Absorptionskältemaschine arbeitet.

10. Verfahren nach Anspruch 1, **dadurch gekennzeichnet**, daß der durch partielle Verdampfung der Kühlflüssigkeit erzeugte Dampf durch ein- oder mehrstufige Dampfstrahlkompressoren verdichtet und in einem Misch-oder Oberflächenkondensator kondensiert wird.

11. Verfahren nach Anspruch 1, **dadurch gekennzeichnet**, daß der Prozessabdampfstrom stromaufwärts von der Mischkondensation in der Kühlflüssigkeit durch einoder mehrstufige Kompressoren vom Druck bei der Behandlung der Öle und Fette bis auf den Mischkondensationsdruck verdichtet wird.

12. Verfahren nach Anspruch 11, **dadurch gekennzeichnet**, daß als ein-oder mehrstufige Kompressoren Dampfstrahlkompressoren verwendet werden, deren Treibdampf sich mit dem Prozessabdampf vermischt und mit diesem gemeinsam durch die Mischkondensation in der Kühlflüssigkeit niedergeschlagen wird.

13. Verfahren nach Anspruch 10, **dadurch gekennzeichnet**, daß als ein-oder mehrstufige Kompressoren Radialkompressoren oder Drehkolbenkompressoren verwendet werden.

14. Verfahren nach Anspruch 1, **dadurch gekennzeichnet**, daß die Abscheidung der Öle, Fette, Fettsäuren und/oder Talge aus dem Kühlflüssigkeitsstrom stromabwärts nach der durch die partielle Verdampfung bewirkten Rückkühlung des Kühlflüssigkeitsstromes erfolgt.

15. Verfahren nach Anspruch 1, **dadurch gekennzeichnet**, das die Mischkondensation mit der Kühlflüssigkeit in einem Mischkondensator (4) durchgeführt wird, der oberhalb eines Verdampfers (8) angeordnet ist, vorzugsweise mit diesem einen gemeinsamen Behälter bildet.

FIG. 1

FIG. 2

0 261 383

FIG. 3

FIG. 4

0 261 383

FIG. 5

0 261 383